# EUROPEAN PATENT SPECIFICATION

(11) **EP 4 138 722 B1**
(45) Date of publication and mention of the grant of the patent: **29.05.2024**
(21) Application number: 21722995.4
(22) Date of filing: 19.04.2021
(51) Int. Cl.: A61C 8/00

(54) **DENTAL IMPLANT TO BE PLACED IN THE POSTERIOR UPPER JAW**
ZAHNIMPLANTAT ZUM EINSETZEN IN DEN HINTEREN OBERKIEFER
IMPLANT DENTAIRE DESTINÉ À ÊTRE PLACÉ DANS LA MÂCHOIRE SUPÉRIEURE POSTÉRIEURE

(30) Priority: 20.04.2020 IT 202000008326
(43) Date of publication of application: 01.03.2023
(73) Proprietor: Nodrill S.r.l., 65129 Pescara (PE) (IT)
(72) Inventor: TRISI, Paolo, 65123 Pescara (PE) (IT)
(74) Representative: Dall'Olio, Christian
(86) International application number: PCT/IB2021/053191
(87) International publication number: WO 2021/214619

(56) References cited:
- EP-A1- 1 576 935
- EP-A1- 2 937 060
- US-A1- 2013 177 874
- US-B2- 9 387 027

## Description

### FIELD OF THE INVENTION

The present invention relates to the technical sector relating to implantology, i.e. the technique with which it is possible to restore, by application of a dental implant (or endosseus implant), a fixed dentition in those who, for various motives or reasons, have suffered the loss of one or more of their natural teeth.

In particular, the present invention relates to a dental implant which, owing to its special conformation, is specifically designed to be implanted in the upper rear maxilla bone, following a lifting of the maxillary sinus with the crestal approach.

### DESCRIPTION OF THE PRIOR ART

The area of the upper rear maxilla is one of the most delicate and difficult-to-treat areas for application of dental implants.

By its nature, the upper rear maxilla bone has a slim thickness, if compare for example with the mandibular bone (lower maxilla bone).

Further, as a consequence of a loss of a tooth (for example a premolar or molar) in a rear area of the upper maxilla bone, the thickness of the upper maxilla bone tends to be further reduced due to the bone atrophy consequent to resorption of the alveolar crest.

The reduction of the thickness of the upper rear maxilla bone leads, as a consequence, to an increase in the volume of the maxillary sinus with a lowering of the sinus membrane (or Schneiderian membrane), i.e. the mucose membrane which internally clads the paranasal cavity of the maxillary sinus.

This reduction of the upper rear maxilla bone leads, as a consequence, to the impossibility of directly implanting a dental implant for the support of a prosthetic replacement (artificial tooth) and thus being able to replenish the patient's set of teeth.

For example, the reduction of the upper rear maxilla bone can result in the bone having an extremely small thickness, between about 2-3 mm and about 6-7 mm.

In these cases, where the vertical thickness of the upper rear maxilla bone has undergone a reduction in thickness such as to prevent direct application of a dental implant, implantological methods include carrying out a lifting of the maxillary sinus, i.e. a raising of the sinus membrane, with the insertion of bone implant material, so as to regenerate a bone thickness that is sufficient to enable a subsequent application of a dental implant.

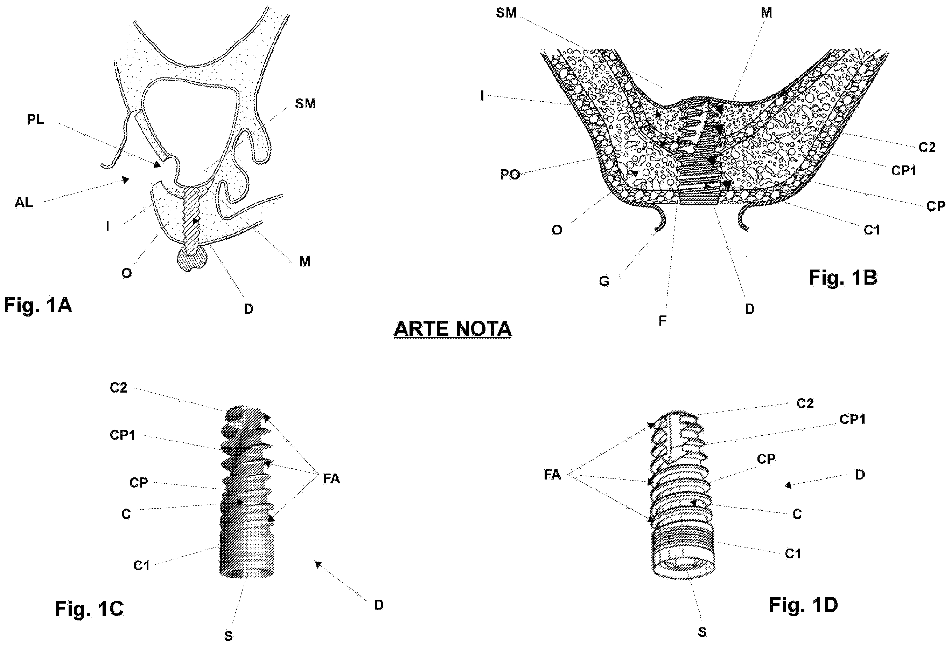

A first known method, illustrated in figure 1A, so as to carry out a lifting of the maxillary sinus (SM) with a bone implant, includes carrying out an opening (AL) for lateral access by means of lateral antrostomy, i.e. the opening of a bone window in the lateral wall (vestibular) (PL) of the maxillary sinus (SM).

Once the lateral opening (AL) has been made, a certain amount of bone implant material (I) can be inserted, with a consequent lifting of the maxillary sinus (SM) and therefore a lifting of the sinus membrane (M), which operation will enable increasing the vertical thickness of the upper rear maxilla bone (O).

Once the bone implant (I) has been inserted, it is possible to proceed with the insertion of a dental implant (D).

This type of method has, however, considerable drawbacks, for example complications can arise that might be serious, such as an infection of the implant with consequent sinusitis or pansinusitis, oedema and post-operative pain for the patients.

Further, the transformation times (remodelling) for the implant and osteointegration of inserted dental implants that are rather long, even up to 12 months following the operation, and therefore a considerable passage of time is necessary before application of the prosthetic element, i.e. the artificial tooth.

A further known method is illustrated in figure 1B.

This method includes carrying out an increase in the thickness of the upper rear maxilla bone (O) in a vertical direction, with a lifting of the maxillary sinus (SM) by the crestal approach.

This method is less invasive with respect to the method that includes the lateral approach, as the carrying out of an opening of a lateral window of the maxillary sinus is not required, thus reducing the risks and the post-operative complications. It includes, once the gum (G) has been opened, carrying out the perforation of the upper rear maxilla bone (O) and the bone floor (PO) of the maxillary sinus (SM) using special instruments (for example burrs or scalpels) without perforating or damaging the sinus membrane (M), which clads the bone floor (PO) of the maxillary sinus (SM).

Therefore it is possible to proceed using other suitable instruments (of a manual or mechanical type) with the detaching and lifting of the maxillary sinus (SM) from the bone floor (PO) of the sinus membrane (M), without perforating it, and therefore with a subsequent insertion of particulate bone implant material (I) inside the hole (F) made, up to beneath the lifted sinus membrane (M), in order to increase the bone thickness in which to insert and apply the dental implant (D).

The known dental implants (D), used for implantation into the upper rear maxilla bone, following the lifting of the maxillary sinus by crestal approach with the method now described, all have substantially the shape illustrated in figures 1C and 1D.

These dental implants (D) comprise a body (C) having a shank shape, for example a truncoconical or cylindrical shape, having a main part (CP) and, on opposite sides to the main part (CP), a first proximal portion (C1), or crestal, and a second distal part (C2), or apical.

In the proximal part (C1) (crestal) there is a housing (S) for inserting and positioning the prosthetic element (artificial tooth) (not illustrated).

The shank-shaped body (C) also comprises a threading (FA) which extends with a spiral shape, about the body (C), starting from the proximal part (C1) (crestal) and which, crossing the main part (CP), reaches the distal part (C2) (apical).

In order to be able to guarantee an optimal mechanical seal and notwithstanding the upper rear maxilla bone (O), this threading (FA) can have a slim thickness, and must be especially sharp, with very pronounced cutting edges.

This dental implant (D) must be inserted, by the distal part (apical) (C2) thereof, in the hole (F) made by crestal approach in the upper rear maxilla bone (O), and then can be screwed in, in such a way that the cutting edges of the spiral threading (FA) penetrate and grip in the bone (O), in order to guarantee mechanical stability, until it is completely inserted in the hole (F) so that the proximal part (crestal) (C1) is at the opening of the hole (F) on the gum (G) (see figure 1B).

During the screwing-in, the distal part (C2) (apical) of the dental implant (D) crosses the zone in which the bone implant (I) has been inserted and can reach into contact with the sinus membrane (M) (see figure 1B once more).

This step of insertion of the dental implant (D) is very delicate, as the sharp threading (FA) present in the apical distal part (C2) of the dental implant (D), reaching into contact with the sinus membrane (M), might perforate it, jeopardising the success of the surgical operation.

If this event were to occur, the material used for the bone implant (I) might penetrate into the cavity of the maxillary sinus (SM), with the serious danger and risk of onset of very significant infections, sinusitis or pansinusitis.

Further, during the screwing-in of the dental implant (D) into the hole (F), the spiral fashion threading (FA) with the cutting edges, present in the upper portion (CP1) of the main part (CP) of the body (C) of the dental implant (D) which lies beneath the apical distal part (C2), penetrates into the material of the bone implant (I) previously inserted in the hole (F).

The presence of a sharp threading (FA) with cutting edges in the upper portion (CP1) of the main part (CP) of the body (C) which penetrates, during the screwing-in of the dental implant (D), into the bone implant material (I) can lead to a dislocation of this material, a circumstance that can lead, as a consequence, to an incorrect osteointegration of the dental implant.

EP 1 576 935 A1 discloses a dental implant having a threaded body and comprising at its distal or apical end portion a spherical cap adapted to abut on the sinus membrane, wherein the distal or apical end has no cutting thread but is provided with an undercut.

The aim of the present invention is therefore to provide a new dental implant to be implanted into the upper rear maxilla bone following the lifting of the sinus membrane (M) of the maxillary sinus (SM) by the crestal approach, able to obviate the drawbacks present in the prior-art dental implants described in the foregoing.

### SUMMARY OF THE INVENTION

In particular, an aim of the present invention is to provide a novel dental implant having a shape such as to be inserted and screwed into a hole, made by crestal approach in a point of the upper rear maxilla bone with a lifting of the sinus membrane and the insertion of a bone implant material, and to guarantee an excellent mechanical grip, at the part of the residual maxilla bone, and at the same time prevent any damage to the sinus membrane of the maxillary sinus as well as any dislocation of the bone implant material.

The above aims are attained according to the present invention defined in the appended claims, and in particular independent claims 1 and 3 defining alternative solutions.

### BRIEF DESCRIPTION OF THE DRAWINGS

The features of preferred, but not exclusive, embodiments of the dental implant of the present invention will be described in the following with reference to the appended tables of drawings, in which:
- figure 1A, already mentioned in the foregoing, schematically illustrates the implantological technique of a dental implant of the prior art following the making of an opening of a lateral window in the upper rear maxilla bone;
- figure 1B, already mentioned in the foregoing, schematically illustrates a dental implant of the prior art implanted in the upper rear maxilla bone following the lifting, with the crestal approach, of the sinus membrane of the maxillary sinus and the insertion of a bone implant;
- figures 1C and 1D illustrate, in relative schematic perspective views, two dental implants of the prior art which are implanted in the upper rear maxilla bone following the lifting of the maxillary sinus with the crestal approach;
- figures 2A, 2B, 2C and 2D illustrate preferred embodiments of the dental implant of the present invention;
- figure 3A is a larger-scale view of the detail denoted by letter K of figure 2A;
- figure 3B illustrates the detail denoted by H of figure 2B in larger scale;
- figures from 4A to 4F schematically illustrate a possible operating sequence for the lifting of the sinus membrane with the crestal approach, with the insertion of a bone implant material, and the subsequent application of a dental implant according to the present invention.

### DESCRIPTION OF THE PREFERRED EMBODIMENTS

With reference to the accompanying tables of drawings, reference numeral (100) denotes the dental implant of the present invention, in its entirety and in the preferred but not exclusive embodiments thereof.

The dental implant (100) is specially conformed to be specifically destined for implantation in the upper rear maxilla bone (O) when the relative thickness is too small to proceed to a direct application of a dental implant, and a preparatory lifting of the sinus membrane (M) of the maxillary sinus (SM) by the crestal approach is required, with the insertion of a bone implant material (I).

The dental implant (100) of the invention comprises a body (1), which has a shank shape, and which comprises a main portion (10) and, on opposite sides with respect to the main portion (10), a first crestal proximal portion, (11), and a second apical distal part, (12).

The dental implant (100) further comprises a threading (2) having a spiral shape with cutting edges (21).

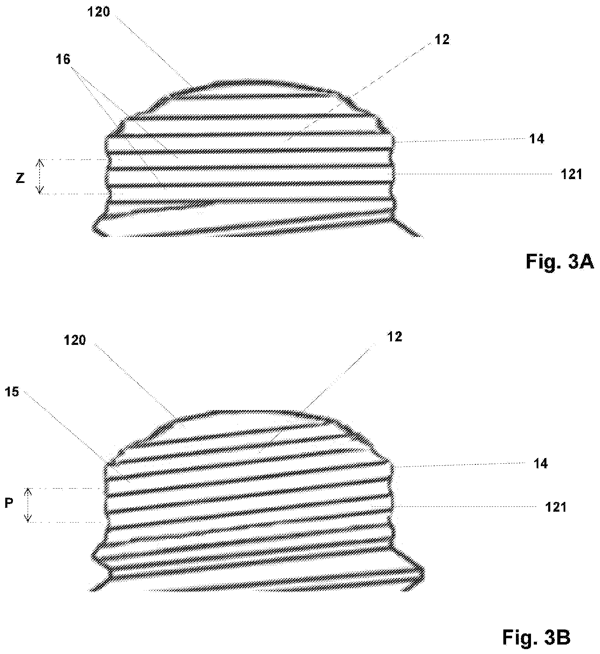

The special characteristics of the dental implant (100) of the present invention consist in the fact that (see figures from 2A to 2D, and figures 3A and 3B):
the threading (2) having a spiral shape with cutting edges (21) extends in spiral fashion only about and along the main portion (10) of the body (1) terminating before the second apical distal part (12);
the second apical distal part (12) is conformed in such a way as to comprise an external surface (14) free of projecting or cutting parts, and so that the external surface (14), at least partially, annularly has a groove (15) or a series of grooves (16).

In substance, then, the threading (2) having a spiral shape winds only about the main portion (10) of the body (1), while the second apical distal part, (12) has an external surface (14), substantially smooth, without projections, protuberances or projecting cutting profiles, but which has only a groove or series of grooves, i.e. furrows or recesses, in any case free of sharp or cutting edges.

Owing to these special characteristics, the dental implant (100) of the invention obviates the drawbacks present in dental implants of known type and enables obtaining the following advantages, as identified in figures from 4A to 4F.

These figures illustrate an operating sequence for implanting the dental implant (100) of the invention in a hole (F) made by crestal approach in a point of the upper rear maxilla bone (O) in which an artificial tooth is to be positioned following the loss of a natural tooth (premolar, or molar) with a consequent reduction of the vertical thickness of the maxilla bone. This operating sequence does not form part of the present invention.

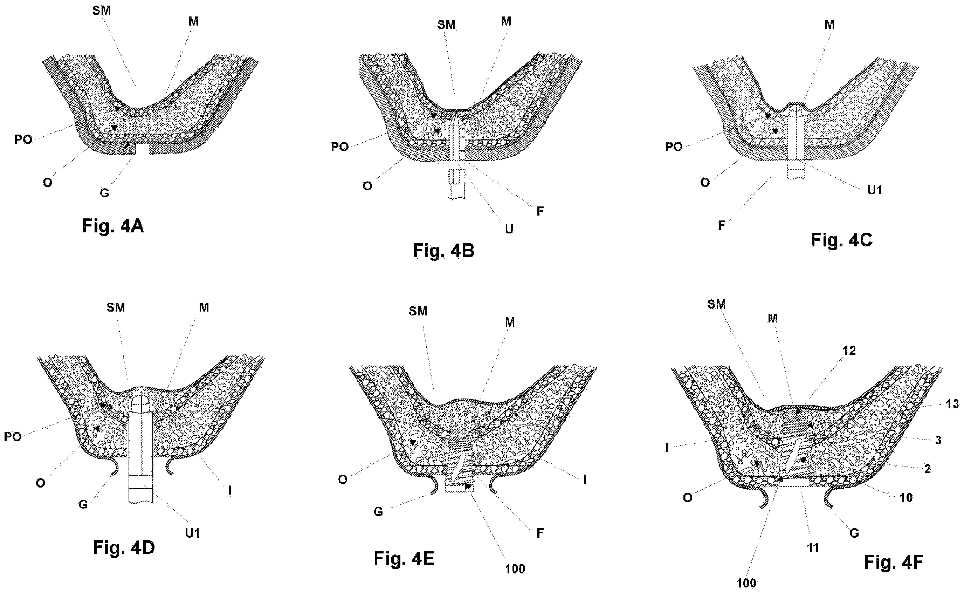

Figures 4A and 4B illustrate the step of making of a hole (F), with the crestal approach, in the upper rear maxilla bone (O) following the opening of the gum (G). To follow up such a hole (F) by the crestal approach, a special instrument (U) is used (of known type, of the burr or scalpel type) to perforate the upper maxilla bone (O) up to reaching the bone floor (PO) of the maxillary sinus (SM) without perforating the sinus membrane (M).

Using a special instrument (U1) (of known type, mechanical or manual), which is inserted in the previously-bored hole (F), it is possible to proceed to the lifting of the sinus membrane (M), creating a volume for insertion of bone implant material (I), thus completing the lifting of the maxillary sinus (SM) and increasing the total thickness of bone support (natural bone plus bone implant material) in which to implant the dental implant (100) (see figures 4C and 4D).

At this point, it is possible to insert the second apical distal part (12) of the dental implant (100) of the invention into the hole (F) (figure 4E) and screw the dental implant (100) into the hole in such a way that the cutting edges (21) of the threading (2) present along the main portion (10) of the body (1) gain a grip, by penetrating into the upper rear maxilla bone (O), causing the whole dental implant (100) to insert into the hole (F), positioning it with the first crestal proximal portion (11) at the external end of the hole (F), at the position in which the gum (G) will be repaired and in which the prosthetic element (artificial tooth) will be applied in a special seat (not illustrated as of known type) present in the a first crestal proximal portion (11) (figure 4F).

As can be seen in figure 4F, the second apical distal part (12) is positioned at the position of the bone implant material (I) and, possibly, even in contact with the sinus membrane (M).

During the step of screwing-in the dental implant (100) into the hole (F), the second apical distal part (12), not having any projection or cutting part in the relative lateral surface (14), even if it were to reach into contact with the sinus membrane (12), would not cause any lesion or tearing of the sinus membrane (M). In other words, during the screwing-in and complete insertion of the dental implant (100) of the invention in the hole (F), the sinus membrane (M) may be reached and contacted by the second apical distal end of the implant but as there is no projecting or cutting part on the external surface (14) of the second apical distal end, the sinus membrane (M) will be protected against any tearing or abrasion.

In substance, the second apical distal end (12) of the dental implant (100) of the present invention is, due to its special conformation, completely atraumatic, enabling conservation of the integrity of the sinus membrane (M) even should, following the complete insertion of the dental implant (100) in the hole (F) made in the upper rear maxilla bone (O), the second apical distal end (12) reach into contact with the sinus membrane (M).

Further, as is once more clearly visible from figure 4F, the second apical distal part (12) of the dental implant (100) will be positioned at the bone implant material (I), previously inserted in the hole (F) following the lifting of the maxillary sinus (SM), i.e. the sinus membrane (M).

Owing to the absence of projecting or cutting parts in the external surface (14) of the second apical distal part (12), the screwing-in of the second apical distal part (12) into the bone implant material (I) will not lead to any dislocation of the material.

Further, the presence of one or more grooves in the external surface (14) of the second apical distal part (12) will facilitate a greater adhesion of the bone implant material (I) to the dental implant (100), facilitating a more effective and rapid osteointegration.

Lastly, the threading (2) with cutting edges (21), which extends only along the main portion (10) of the body (1) of the dental implant (100), will substantially be positioned at the maxilla bone (O), i.e. at the residual natural and original portion of bone, facilitating an excellent adhesion and mechanical fixing of the dental implant.

It is clear, therefore, from the above description, and from what is illustrated in the figures, in particular in figures 4B and 4F, how the dental implant (100) of the present invention obviates, in an extremely effective way, the drawbacks present in the dental implants of the prior art, and advantageously obviates the drawbacks and complications cause by the use thereof.

Other further advantageous characteristics and preferred aspects of the dental implant (100) of the invention are described in the following; these characteristics can exist singly or in any combination with one another.

In the appended figures, some preferred combinations are illustrated, though the dental implant of the present invention can in any case have other combinations or further accessory characteristics, all falling within the scope of the present invention, as set out in claims 1 or 3.

The dental implant (100) can preferably be realised in such a way as to have an overall length (H) comprised between 6 and 20 mm, with the main part (10) of the body (1) having a length (H1) for example comprised between 3 and 13 mm, and with the second apical distal part (12) having a length (H2) for example for example comprised between 0.5 and 10 mm.

The second apical distal part (12) is preferably conformed in such a way as to comprise an end portion (120) having a spherical cap shape.

The second apical distal part (12) can be conformed in such a way as to comprise an cylindrically-shaped portion (121) and an end portion (120) having a spherical cap shape. For example a cylindrically-shaped portion (121) having a height comprised between 0 and 10 mm and an end portion (120) having a spherical cap shape having a height comprised between 0.5 and 3 mm.

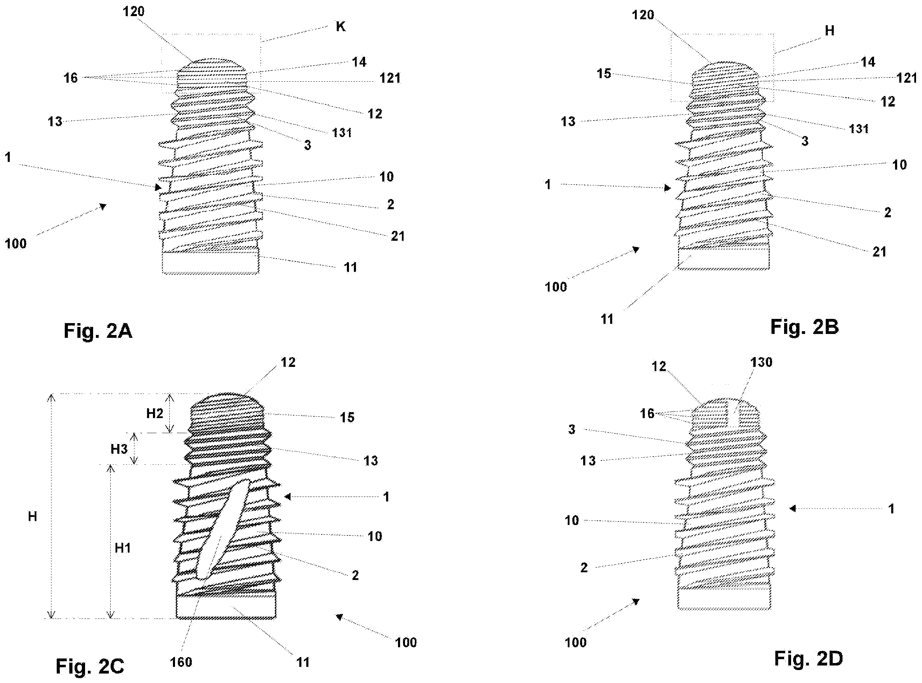

According to preferred embodiments, for example illustrated in figures 2B, 2C, 3B, the second apical distal part, (12) is conformed so that the relative external surface (14) annularly has a groove (15) which extends with a spiral shape along the external surface (14).

For example, the spiral-shaped groove (15) extends at least along the cylindrically-shaped portion (121).

The spiral-shaped groove (15) preferably forms a spiral having a constant or variable pitch (p); for example it can have a constant pitch (p) comprised between 0.1 mm and 1.5 mm.

The spiral-shaped groove (15) can preferably have a depth comprised between 0.01 mm and 1.5 mm.

In other preferred embodiments, for example illustrated in figures 2A, 2D and 3A, the second apical distal part (12) is conformed in such a way that the relative external surface (14) annularly has a series of grooves (16) having a circular or semi-circular shape, being coaxial and reciprocally arranged superposed and distanced by a constant or variable distance (z); for example with a constant distance (z) comprised between 0.01 mm and 1.5 mm.

For example, the apical distal part, (12) is conformed in such a way that the series of grooves (16) having a circular or semi-circular shape are arranged at least along the cylindrically-shaped portion (121).

The grooves (16) can preferably have a depth comprised between 0.01 mm and 1.5 mm.

The grooves (16) can all be circumferentially formed, all being semi-circumferential, or having an arc of circumference shape, or some of which being circumferentially formed and others having a semi-circumferential or an arc of circumference shape.

The second apical distal part, (12) can possibly be conformed in such a way that the relative external surface (14) can be affected by a plurality of grooves having a spiral shape intervalled from one another along the height of the second apical distal part (12) or an alternation between grooves having a circumferential shape, a semi-circumferential or an arc of circumference shape, and grooves having a spiral shape, or even grooves of another other shape or progression, as long as they are free of projecting or cutting edges.

According to the special preferred but not exclusive embodiments illustrated in the figures of the drawings, the dental implant (100) can be realised in such a way that the body (1) further comprises an intermediate portion (13), which is arranged between the main portion (10) and the apical distal part (12).

In these cases, the dental implant (100), further comprises a second threading (3) which winds in a spiral fashion only about the intermediate portion (13), the second threading (3) being conformed in such a way as to have rounded and not cutting edges (131).

The intermediate portion (13), once the dental implant (100) has been completely inserted in the hole (F) made in the upper rear maxilla bone (C) by the crestal approach, may be positioned at the bone implant material (I) (see figure 4F). Owing to the presence of the second threading (3) on the intermediate part (13), the screwing-in and insertion of the dental implant (100) will be facilitated, as will the fixing thereof to the bone implant material (I).

At the same time, the presence of rounded and non-cutting edges (131) on the second threading (3) in the intermediate part (13), will prevent, or at least reduce, any possible dislocation of the bone implant material during the screwing-in of the dental implant (100).

It is newly specified, as previously, that the presence of the intermediate portion (13) is not an essential aspect, as the dental implant (100) of the invention can be made without the intermediate portion (13), i.e. with only the main portion (10) and the second apical distal part (12) at an end of the main portion (10).

The presence of the intermediate portion (13), between the main portion (10) and the second apical distal part (12) might enable obtaining further preferred advantages, as illustrated in the foregoing.

The main portion (10) of the body (1) is preferably conformed so as to have a truncoconical shape, for example with a first smaller diameter comprised between 3 and 7 mm, and with a second bigger diameter comprised between 0.3 and 2 mm, or have a cylindrical shape, for example with a diameter comprised between 3 and 7 mm.

In a case where the intermediate portion (13) is present, it can be conformed so as to have a cylindrical or truncoconical shape, for example with a height comprised between 0 and 10 mm, and a diameter comprised between a minimum value of about 1.7 mm and a maximum value of about 7 mm.

The apical distal part (12) is preferably realised in such a way as to comprise a longitudinal recess (130), performing a function of material discharge during the screwing-in of the dental implant (100) (visible for example in figure 2D).

The main part (10) of the body (1) is preferably realised in such a way as to comprise a furrow (160), also having the function of a discharge, arranged substantially longitudinally to the main part (10) and transversally to a part of the threads of the threading (2) having a spiral shape (see figure 2C).

## Claims

1. A dental implant (100) to be implanted in the upper rear maxillary (O) following the lifting of the sinus membrane (M) of the maxillary sinus (SM) by the crestal approach, comprising:
a body (1) having a shank shape, comprising a main portion (10) and, on opposite sides with respect to the main portion (10), a first crestal proximal portion, (11),
and a second apical distal part, (12);
a threading (2) having a spiral shape with cutting edges (21);
wherein the threading (2) having a spiral shape with cutting edges (21) extends in spiral fashion only about and along the main portion (10) of the body (1) terminating before the second apical distal part (12);
wherein the second apical distal part (12) is conformed in such a way as to comprise an external surface (14) free of projecting or cutting parts,
wherein the second apical distal part (12) is conformed in such a way as to comprise a cylindrically-shaped portion (121) and an end portion (120) having a spherical cap shape, wherein the second apical distal part, (12) is conformed so that the relative external surface (14) is annularly affected by a groove (15) which extends with a spiral shape along the external surface (14),
wherein the second apical distal part (12) is conformed so that the spiral-shaped groove (15) extends at least along the cylindrically-shaped portion (121).

2. The dental implant of claim 1, wherein the spiral-shaped groove (15) forms a spiral having a constant or variable pitch (p).

3. A dental implant (100) to be implanted in the upper rear maxillary (O) following the lifting of the sinus membrane (M) of the maxillary sinus (SM) by the crestal approach, comprising:
a body (1) having a shank shape, comprising a main portion (10) and, on opposite sides with respect to the main portion (10), a first crestal proximal portion, (11),
and a second apical distal part, (12);
a threading (2) having a spiral shape with cutting edges (21);
wherein the threading (2) having a spiral shape with cutting edges (21) extends in spiral fashion only about and along the main portion (10) of the body (1) terminating before the second apical distal part (12);
wherein the second apical distal part (12) is conformed in such a way as to comprise an external surface (14) free of projecting or cutting parts,
wherein the second apical distal part (12) is conformed in such a way as to comprise a cylindrically-shaped portion (121) and an end portion (120) having a spherical cap shape; wherein
the second apical distal part (12) is conformed in such a way that the relative external surface (14) is annularly affected by a series of grooves (16) having a circular or semi-circular shape, being coaxial and reciprocally arranged superposed and distanced by a constant or variable distance (z).

4. The dental implant (100) of claim 3, wherein the apical distal part, (12) is conformed in such a way that the series of grooves (16) having a circular or semi-circular shape are arranged at least along the cylindrically-shaped portion (121).

5. The dental implant (100) of any one of the preceding claims, wherein the body (1) comprises an intermediate portion (13) arranged between the main portion (10) and the apical distal part (12), and in that it comprises a second threading (3) which winds in a spiral fashion only about the intermediate portion (13), the second threading (3) being conformed in such a way as to have rounded and not cutting edges (131).

6. The dental implant (100) of any one of the preceding claims, wherein the main portion (10) of the body (1) is conformed so as to have a truncoconical shape or a cylindrical shape.

7. The dental implant (100) of claims 5 and 6, wherein the intermediate portion (13) of the body (1) is conformed so as to have a cylindrical or truncoconical shape.

8. The dental implant (100) of any one of the preceding claims, wherein the apical distal part (12) is realised in such a way as to comprise a longitudinal recess (130).

9. The dental implant (100) of any one of the preceding claims, wherein the main part (10) of the body (1) is realised in such a way as to comprise a furrow (160) arranged substantially longitudinally to the main part (10) and transversally to a part of the threads of the threading (2) having a spiral shape.

## Patentansprüche

1. Zahnimplantat (100) zum Implantieren in den oberen hinteren Oberkiefer (O) nach dem Anheben der Sinusmembran (M) der Kieferhöhle (SM) durch den krestalen Zugang, umfassend:
einen Körper (1) mit einer Schaftform, der einen Hauptabschnitt (10) und auf gegenüberliegenden Seiten in Bezug auf den Hauptabschnitt (10) einen ersten krestalen proximalen Abschnitt (11) und einen zweiten apikalen distalen Teil (12) umfasst;
ein Gewinde (2), das eine Spiralform mit Schneidkanten (21) aufweist;
wobei sich das Gewinde (2), das eine Spiralform mit Schneidkanten (21) aufweist, nur um und entlang des Hauptabschnitts (10) des Körpers (1) spiralförmig erstreckt und vor dem zweiten apikalen distalen Teil (12) endet;
wobei der zweite apikale distale Teil (12) so geformt ist, dass er eine Außenfläche (14) aufweist, die frei von vorstehenden oder schneidenden Teilen ist;
wobei der zweite apikale distale Teil (12) so geformt ist, dass er einen zylindrisch geformten Abschnitt (121) und einen Endabschnitt (120) mit einer kugelförmigen Kappenform aufweist, wobei der zweite apikale distale Teil (12) so geformt ist, dass die entsprechende Außenfläche (14) ringförmig von einer Nut (15) betroffen ist, die sich mit einer Spiralform entlang der Außenfläche (14) erstreckt,
wobei der zweite apikale distale Teil (12) so geformt ist, dass sich die spiralförmige Nut (15) zumindest entlang des zylindrisch geformten Abschnitts (121) erstreckt.

2. Zahnimplantat nach Anspruch 1, wobei die spiralförmige Nut (15) eine Spirale mit einer konstanten oder variablen Steigung (p) bildet.

3. Ein Zahnimplantat (100), das in den oberen hinteren Oberkiefer (O) nach dem Anheben der Sinusmembran (M) der Kieferhöhle (SM) durch den krestalen Ansatz implantiert werden soll, umfassend:
einen Körper (1) mit einer Schaftform, der einen Hauptabschnitt (10) und auf gegenüberliegenden Seiten in Bezug auf den Hauptabschnitt (10) einen ersten krestalen proximalen Abschnitt (11) und einen zweiten apikalen distalen Teil (12) umfasst;
ein Gewinde (2), das eine Spiralform mit Schneidkanten (21) aufweist;
wobei sich das Gewinde (2), das eine Spiralform mit Schneidkanten (21) aufweist, nur um und entlang des Hauptabschnitts (10) des Körpers (1) spiralförmig erstreckt und vor dem zweiten apikalen distalen Teil (12) endet;
wobei der zweite apikale distale Teil (12) so geformt ist, dass er eine Außenfläche (14) aufweist, die frei von vorstehenden oder schneidenden Teilen ist;
wobei der zweite apikale distale Teil (12) so geformt ist, dass er einen zylindrisch geformten Abschnitt (121) und einen Endabschnitt (120) mit einer kugelförmigen Kappenform umfasst;
wobei der zweite apikale distale Teil (12) so geformt ist, dass die entsprechende Außenfläche (14) ringförmig von einer Reihe von Nuten (16) mit kreisförmiger oder halbkreisförmiger Form betroffen ist, die koaxial und wechselseitig übereinander angeordnet sind und um einen konstanten oder variablen Abstand (z) beabstandet sind.

4. Zahnimplantat (100) nach Anspruch 3, wobei der apikale distale Teil (12) so geformt ist, dass die Reihe von Nuten (16) mit einer kreisförmigen oder halbkreisförmigen Form zumindest entlang des zylindrisch geformten Abschnitts (121) angeordnet sind.

5. Das Zahnimplantat (100) nach einem der vorhergehenden Ansprüche, wobei der Körper (1) einen Zwischenabschnitt (13) umfasst, der zwischen dem Hauptabschnitt (10) und dem apikalen distalen Teil (12) angeordnet ist, und dass er ein zweites Gewinde (3) umfasst, das sich spiralförmig nur um den Zwischenabschnitt (13) windet, wobei das zweite Gewinde (3) so geformt ist, dass es abgerundete und nicht schneidende Kanten (131) aufweist.

6. Zahnimplantat (100) nach einem der vorhergehenden Ansprüche, wobei der Hauptteil (10) des Körpers (1) kegelstumpfförmig oder zylindrisch geformt ist.

7. Zahnimplantat (100) nach einem der Ansprüche 5 und 6, wobei der Zwischenabschnitt (13) des Körpers (1) so geformt ist, dass er eine zylindrische oder kegelstumpfförmige Form aufweist.

8. Zahnimplantat (100) nach einem der vorhergehenden Ansprüche, wobei der apikale distale Teil (12) so ausgeführt ist, dass er eine Längsausnehmung (130) aufweist.

9. Zahnimplantat (100) nach einem der vorhergehenden Ansprüche, bei dem der Hauptteil (10) des Körpers (1) so ausgeführt ist, dass er eine Furche (160) aufweist, die im Wesentlichen in Längsrichtung des Hauptteils (10) und quer zu einem Teil der Gewindegänge des Gewindes (2) angeordnet ist und eine Spiralform aufweist.

## Revendications

1. Implant dentaire (100) à implanter dans le maxillaire supérieur arrière (O) suite au soulèvement de la membrane sinusienne (M) du sinus maxillaire (SM) par l'approche crestale, comprenant :
un corps (1) ayant une forme de tige, comprenant une partie principale (10) et, sur des côtés opposés par rapport à la partie principale (10), une première partie proximale crestale (11) et une seconde partie distale apicale (12) ;
un filetage (2) en forme de spirale avec des arêtes coupantes (21) ;
dans lequel le filetage (2) ayant une forme de spirale avec des bords coupants (21) s'étend en spirale uniquement autour et le long de la partie principale (10) du corps (1) se terminant avant la deuxième partie distale apicale (12) ;
la deuxième partie distale apicale (12) est conformée de manière à comprendre une surface externe (14) exempte de parties saillantes ou coupantes ;
dans laquelle la deuxième partie distale apicale (12) est conformée de manière à comprendre une partie de forme cylindrique (121) et une partie d'extrémité (120) ayant une forme de calotte sphérique, dans laquelle la deuxième partie distale apicale (12) est conformée de manière à ce que la surface externe relative (14) soit annulairement affectée par une rainure (15) qui s'étend avec une forme de spirale le long de la surface externe (14),
dans lequel la seconde partie distale apicale (12) est conformée de sorte que la rainure en forme de spirale (15) s'étende au moins le long de la partie de forme cylindrique (121).

2. L'implant dentaire de la revendication 1, dans lequel la rainure en forme de spirale (15) forme une spirale ayant un pas (p) constant ou variable.

3. Implant dentaire (100) à implanter dans le maxillaire supérieur arrière (O) après le soulèvement de la membrane sinusienne (M) du sinus maxillaire (SM) par l'approche crestale, comprenant :
un corps (1) ayant une forme de tige, comprenant une partie principale (10) et, sur des côtés opposés par rapport à la partie principale (10), une première partie proximale crestale (11) et une seconde partie distale apicale (12) ;
un filetage (2) en forme de spirale avec des arêtes coupantes (21) ;
dans lequel le filetage (2) ayant une forme de spirale avec des bords coupants (21) s'étend en spirale uniquement autour et le long de la partie principale (10) du corps (1) se terminant avant la deuxième partie distale apicale (12) ;
la deuxième partie distale apicale (12) est conformée de manière à comprendre une surface externe (14) exempte de parties saillantes ou coupantes ;
la deuxième partie distale apicale (12) est conformée de manière à comprendre une partie de forme cylindrique (121) et une partie d'extrémité (120) ayant la forme d'une calotte sphérique ;
dans lequel la deuxième partie distale apicale (12) est conformée de telle sorte que la surface externe relative (14) est annulairement affectée par une série de rainures (16) de forme circulaire ou semi-circulaire, coaxiales et disposées réciproquement, superposées et distantes d'une distance constante ou variable (z).

4. L'implant dentaire (100) de la revendication 3, dans lequel la partie distale apicale (12) est conformée de telle sorte que la série de rainures (16) ayant une forme circulaire ou semi-circulaire est disposée au moins le long de la partie de forme cylindrique (121).

5. L'implant dentaire (100) de l'une quelconque des revendications précédentes, dans lequel le corps (1) comprend une partie intermédiaire (13) disposée entre la partie principale (10) et la partie distale apicale (12), et en ce qu'il comprend un second filetage (3) qui s'enroule en spirale uniquement autour de la partie intermédiaire (13), le second filetage (3) étant conformé de manière à présenter des bords arrondis et non coupants (131).

6. L'implant dentaire (100) de l'une quelconque des revendications précédentes, dans lequel la partie principale (10) du corps (1) est conformée de manière à avoir une forme tronconique ou une forme cylindrique.

7. L'implant dentaire (100) des revendications 5 et 6, dans lequel la partie intermédiaire (13) du corps (1) est conformée de façon à avoir une forme cylindrique ou tronconique.

8. L'implant dentaire (100) de l'une quelconque des revendications précédentes, dans lequel la partie distale apicale (12) est réalisée de manière à comporter un renfoncement longitudinal (130).

9. L'implant dentaire (100) de l'une quelconque des revendications précédentes, dans lequel la partie principale (10) du corps (1) est réalisée de manière à comporter un sillon (160) disposé sensiblement longitudinalement à la partie principale (10) et transversalement à une partie des fils du filetage (2) ayant une forme de spirale.
